# EUROPÄISCHE PATENTSCHRIFT

(11) **EP 3 219 126 B1**
(45) Veröffentlichungstag und Bekanntmachung des Hinweises auf die Patenterteilung: **25.07.2018**
(21) Anmeldenummer: 15794874.6
(22) Anmeldetag: 09.11.2015
(51) Int. Cl.: H04W 76/14, H04W 4/18, H04W 4/00, H04L 29/06, H04L 29/08, H04W 84/18, H04W 4/80

(54) **VERFAHREN ZUR ÜBERMITTLUNG VON DATEN ZWISCHEN ZWEI TEILNEHMERN**
METHOD FOR TRANSMITTING DATA BETWEEN TWO SUBSCRIBERS
PROCÉDÉ POUR LA TRANSMISSION DE DONNÉES ENTRE DEUX DISPOSITIFS UTILISATEURS

(30) Priorität: 13.11.2014 DE 102014223211
(43) Veröffentlichungstag der Anmeldung: 20.09.2017
(73) Patentinhaber: Makaio GmbH, 61348 Bad Homburg (DE)
(72) Erfinder: SCHRAMM, Christoph, 61350 Bad Homburg (DE)
(74) Vertreter: Jacobi, Markus Alexander
(86) Internationale Anmeldenummer: PCT/EP2015/076020
(87) Internationale Veröffentlichungsnummer: WO 2016/075066

(56) Entgegenhaltungen:
- CA-A1- 2 865 738
- US-A1- 2002 156 893
- US-A1- 2003 236 890

## Beschreibung

Vor allem während Veranstaltungen wie Messen, Konzerten oder an belebten Orten wie Flughäfen sind Funkzellen oder ggf. vorhandenes Infrastruktur-WLAN (Wireless Local Area Network) häufig überlastet. Eine wichtige Herausforderung an den Techniker lautet: wie können trotzdem Daten zwischen Benutzern ausgetauscht werden?

Technische Voraussetzungen hierfür sind mobile Geräte oder Computer mit mindestens einer der folgenden Übertragungstechnologien:
- Wi-Fi Direct (z.B. Android)
- P2P-Networking (iOS "Multipeer Connectivity Framework")
- Bluetooth Low Energy,
- CFNetwork,
- Bluetooth.

Eine optionale Ergänzung hierzu wäre eine Internetverbindung über herkömmliche Übertragungswege wie z.B. WiFi, GSM, UMTS, LTE.

Von Geräte- und Software-Herstellern werden bereits bestimmte Frameworks und Technologien zur Verfügung gestellt, die im Folgenden kurz beschrieben werden:

### a) Wi-Fi Direct

Industriestandard, der z.B. in Windows Phone 8.1 und Android enthalten ist, aber nicht in Apple iOS.

### b) Multipeer Connectivity Framework

Von Apple geschaffenes HiLevel-Framework, um ähnlich wie Wi-Fi Direct Geräte adhoc miteinander zu verbinden. Es kann eine Verbindung auch über Bluetooth bereitstellen, ist aber nicht kompatibel mit Wi-Fi Direct.

### c) CFNetwork

LowLevel-Framework von Apple für TCP/IP-Verbindungen. Es stellt Verbindungen in Infrastruktur-Netzwerken bereit, aber auch über Bluetooth.

### d) Bluetooth Low Energy

Industriestandard, der vor allem für Pulsmesser und ähnliche Geräte geschaffen wurde, die keinen hohen Energieverbrauch haben dürfen. Es wird von Windows Phone 8.1, Android und iOS unterstützt. Die maximale Paketgröße ist sehr gering (Geräteabhängig < 120 bytes, oft nur etwa 20 bytes).
Allen diesen Rahmenbedingungen ist gemeinsam, dass sie nur auf einem Teil der marktüblichen Geräte und nicht absolut geräteübergreifend arbeiten. Grundsätzlich bauen diese Technologien "AdHoc-Netzwerke" auf, ohne dass ein Infrastruktur-WLAN (z.B. durch einen WLAN-Access Point) existieren muss.

Das Patentdokument CA 2 865 738 A1 offenbart ein Kommunikationsverfahren und ein entsprechendes Computerprogramm. Die Kommunikationseinrichtungen sind jeweils eingerichtet, über Near-Field Communication (NFC) sowie über ein WLAN-Verfahren (Wi-Fi, Wi-Fi Direct oder Wi-Fi ad-hoc) zu kommunizieren. Mittels Wi-Fi kann die Vorrichtung entweder im Infrastrukturmodus arbeiten und dabei mit einem Access Point kommunizieren oder mittels Wi-Fi Direct eine direkte Verbindung ohne einen Access Point mit einem weiteren Kommunikationsgerät. Über die NFC-Schnittstelle kann die Kommunikationsvorrichtung in einem Nahbereich kommunizieren. Bei der Kommunikationsvorrichtung kann es sich um ein sogenanntes Legacy-Gerät handeln, welches nicht mittels Wi-Fi Direct kommunizieren kann und somit nur im Infrastrukturmodus arbeitet. Um zwischen ein erstes und ein zweites Kommunikationsgerät eine Verbindung herzustellen, von denen zumindest eines ein Legacy-Gerät ist, wird ein drittes Kommunikationsgerät als Zwischeneinheit eingesetzt. Das dritte Kommunikationsgerät konfiguriert dabei zunächst ein erstes Kommunikationsgerät, so dass dieses mit dem dritten Kommunikationsgerät verbunden wird. Anschließend baut das dritte Kommunikationsgerät eine Verbindung zum zweiten Drahtlos-Kommunikationsgerät auf und konfiguriert dieses ebenfalls derart, dass dieses eine Verbindung zum dritten Kommunikationsgerät herstellt. Anschließend können das erste und das zweite Kommunikationsgerät über das als Access Point funktionierende dritte Kommunikationsgerät miteinander kommunizieren.

Vor diesem Hintergrund ist es eine Aufgabe der vorliegenden Erfindung, ein System vorzuschlagen, mittels dessen es möglich ist, Daten von "Clients" (Teilnehmer) auf gleichen oder unterschiedlichen Plattformen umzusetzen und zu vermitteln, und zwar derart, dass die Übertragung der Daten im Rahmen der Gegebenheiten möglichst schnell erfolgt.
Es wird ein Verfahren zur Übermittlung von Daten zwischen einem ersten und einem zweiten Teilnehmer unter Verwendung zumindest einer Umsetzungseinheit vorgeschlagen, wobei der erste Teilnehmer, der zweite Teilnehmer und die Umsetzungseinheit jeweils zur drahtlosen Datenübertragung im Nahbereich mit einem ersten Übertragungsverfahren und einem zweiten Übertragungsverfahren eingerichtet sind. Dabei ist die maximale Datenübertragungsrate des zweiten Übertragungsverfahrens größer als die des ersten Übertragungsverfahrens, wobei das zweite Übertragungsverfahren mehrere Varianten aufweist und wobei der erste Teilnehmer und der zweite Teilnehmer jeweils nur zur Ausführung solcher Varianten eingerichtet sind, welche zueinander inkompatibel sind.
Bei dem vorgeschlagenen Verfahren wird in einem ersten Schritt durch die Umsetzungseinheit eine Kennung periodisch ausgesendet und ferner durch den ersten und den zweiten Teilnehmer einer Identifikation periodisch ausgesendet unter Verwendung des ersten Übertragungsverfahrens. Diese Kennung der Umsetzungseinheit wird in einem nachfolgenden Schritt durch den ersten und den zweiten Teilnehmer unter Verwendung des ersten Übertragungsverfahrens empfangen, wobei die Teilnehmer und die Umsetzungseinheit ebenfalls die ausgesandten Identifikationen der Teilnehmer empfangen. Des Weiteren wird eine direkte drahtlose Verbindung zwischen dem ersten Teilnehmer und dem zweiten Teilnehmer unter Verwendung des ersten Übertragungsverfahrens hergestellt, wobei Identifikationen der Teilnehmer und optional die Kennung der Umsetzungseinheit ausgetauscht werden.
Bei dem Verfahren ist es ferner vorgesehen, dass die Umsetzungseinheit zur Ausführung zumindest einer Variante des zweiten Übertragungsverfahrens eines jeden Teilnehmers eingerichtet ist, und dass eine durch die Umsetzungseinheit vermittelte Verbindung zwischen dem ersten Teilnehmer und dem zweiten Teilnehmer hergestellt wird, wobei die Teilnehmer jeweils eine Verbindung zu der Umsetzungseinheit unter Verwendung des zweiten Übertragungsverfahrens aufbauen, und die Umsetzungseinheit Daten vom ersten Teilnehmer an den zweiten Teilnehmer weiterleitet und umgekehrt Daten vom zweiten Teilnehmer an den ersten Teilnehmer weiterleitet.
Das vorgeschlagene Verfahren ermöglicht die Übermittlung von Daten zwischen dem ersten und dem zweiten Teilnehmer mit hoher Geschwindigkeit, auch wenn die beiden Teilnehmer Übertragungsverfahren bzw. Varianten davon einsetzen, die nicht zueinander kompatibel sind. Dies ist beispielsweise der Fall, wenn die beiden Teilnehmer jeweils unterschiedliche Betriebssysteme verwenden, also zum Beispiel der erste Teilnehmer als Betriebssystem iOS einsetzt und der zweite Teilnehmer als Betriebssystem Android einsetzt. Eine direkte Datenübertragung mit hoher Datenübertragungsrate zwischen diesen beiden Betriebssystemen bzw. Plattformen ist aufgrund unterschiedlicher implementierter Varianten der jeweiligen Übertragungsverfahren nicht möglich. Üblicherweise wird das Problem umgangen, indem auszutauschende Daten vom einen Teilnehmer auf einen "Cloud Server" übertragen werden und vom jeweils anderen Teilnehmer von dem Cloud Server wieder heruntergeladen werden. Diese Lösung des Problems erfordert jedoch eine Internetverbindung, die nicht immer verfügbar ist. Ist eine Internetverbindung grundsätzlich verfügbar, so sind insbesondere bei Veranstaltungen, wie eingangs bereits erwähnt, die bereitgestellten Zugangsmöglichkeiten zum Internet häufig überlastet.
Zudem bestehen darüber hinaus bei vielen Nutzern Bedenken hinsichtlich des Schutzes ihrer Daten, wenn diese über das Internet übermittelt werden. Daher werden bei dem vorgeschlagenen Verfahren erste und zweite Übertragungsverfahren eingesetzt, die zu einer drahtlosen Datenübertragung im Nahbereich eingerichtet sind. Unter Nahbereich wird hierbei der Bereich verstanden, innerhalb dem eine direkte Kommunikation zwischen dem ersten Teilnehmer, dem zweiten Teilnehmer und/oder der Umsetzungseinheit unter Verwendung des ersten und des zweiten Übertragungsverfahrens möglich ist, ohne dass weitere Komponenten, insbesondere Infrastrukturkomponenten wie "WLAN Access Points" oder Mobilfunk-Basisstationen eingesetzt werden. Somit ist der Nahbereich durch die Reichweite des jeweiligen Übertragungsverfahrens definiert und beträgt üblicherweise bei freier Sicht weniger als 100 Meter und innerhalb von Gebäuden weniger als etwa 10 bis 20 Meter.

Die verwendeten Übertragungsverfahren sind unterteilt in erste und zweite Übertragungsverfahren, wobei die maximale Datenübertragungsrate des zweiten Übertragungsverfahrens größer ist als die des ersten Übertragungsverfahrens. Umgekehrt weist das erste Übertragungsverfahren gegenüber dem zweiten Übertragungsverfahren den Vorteil auf, dass es weniger Energie als das zweite Datenübertragungsverfahren benötigt. Somit wird das erste Übertragungsverfahren eingesetzt, um die Anwesenheit des ersten und des zweiten Teilnehmers sowie der Umsetzungseinheit festzustellen und deren Kennungen bzw. Identifikationen zu übertragen. Aufgrund des geringeren Energiebedarfs des ersten Übertragungsverfahrens wird bevorzugt fortlaufend unter Verwendung des ersten Verfahrens das Empfangen durchgeführt, sodass ausgesendete Kennungen in der Umsetzungseinheit jederzeit empfangen werden können. Dementsprechend ist bevorzugt vorgesehen, dass aufgrund des vergleichsweise geringen Energiebedarfs die Umsetzungseinheit ihre Kennung periodisch ausstrahlt, wobei das Zeitintervall vorgebbar ist und bevorzugt im Bereich von etwa 10 ms bis 10 Sekunden, insbesondere 10 ms bis 5 Sekunden, liegt.

Der Empfang der Kennung der Umsetzungseinheit durch die Teilnehmer kann als Auslöser verwendet werden, um weitere Aktionen durchzuführen. Beispielsweise kann ein Teilnehmer, einem Anwender signalisieren, dass eine schnelle Datenübertragung unter Vermittlung durch die Umsetzungseinheit zur Verfügung steht.

In Fortbildung des Verfahrens kann vorgesehen sein, dass auch die Teilnehmer unter Verwendung des ersten Übertragungsverfahrens ihre jeweilige Identifikation periodisch ausstrahlen, wobei der Zeitabstand ebenfalls im Bereich von etwa 10 ms bis 10 Sekunden liegen kann. Hierbei sind die Teilnehmer und/oder die Umsetzungseinheit ebenfalls dazu eingerichtet, die ausgesandten Identifikationen der Teilnehmer unter Verwendung des ersten Übertragungsverfahrens fortlaufend zu empfangen.

Zur Übertragung von dem ersten zu dem zweiten Teilnehmer, oder umgekehrt, wird gemäß des vorgeschlagenen Verfahrens zunächst unter Verwendung des ersten Übertragungsverfahrens eine direkte drahtlose Verbindung zwischen den Teilnehmern hergestellt. Die Verbindung ist bidirektional. Über diese direkte drahtlose Verbindung werden die Identifikationen der beteiligten Teilnehmer und/oder die Kennung der Umsetzungseinheit ausgetauscht.

Die maximal erreichbare Datenübertragungsrate des ersten Übertragungsverfahrens ist in der Regel so gering, dass eine Übermittlung der Daten unter Verwendung des ersten Übertragungsverfahrens unverhältnismäßig lange dauern würde. Selbst für die Fälle, bei denen eine Übermittlung der Daten mithilfe des ersten Übertragungsverfahrens noch in akzeptabler Zeit erfolgen könnte, ist es jedoch vorteilhaft, sofern vorhanden, schnellere Übertragungsverfahren einzusetzen, damit die Übertragung schneller abgeschlossen ist. Daher ist es bei dem Verfahren vorgesehen, dass die direkte, drahtlose Verbindung zwischen dem ersten und dem zweiten Teilnehmer unter Verwendung des ersten Übertragungsverfahrens nicht zum Übermitteln der Daten verwendet wird. Stattdessen stellen jeweils der erste Teilnehmer und der zweite Teilnehmer unter Verwendung einer jeweils unterstützten Variante des zweiten Übertragungsverfahrens eine Verbindung zu der Umsetzungseinheit her. Dies ist möglich, da die Umsetzungseinheit derart eingerichtet ist, dass diese zumindest eine Variante des zweiten Übertragungsverfahrens eines jeden Teilnehmers ausführen kann. Eine direkte drahtlose Verbindung unter Verwendung des zweiten Übertragungsverfahrens zwischen dem ersten und dem zweiten Teilnehmer ist hingegen nicht möglich, da die jeweils durch den ersten bzw. den zweiten Teilnehmer unterstützten Varianten des zweiten Übertragungsverfahrens zueinander inkompatibel sind.

Nachdem beide Teilnehmer zu der Umsetzungseinheit jeweils eine Verbindung unter Verwendung des zweiten Übertragverfahrens hergestellt haben, kann nun das Übermitteln der Daten zwischen dem ersten und dem zweiten Teilnehmer erfolgen, wobei die Umsetzungseinheit Daten zwischen den Teilnehmern weiterleitet.

Bevorzugt werden über die direkte drahtlose Verbindung unter Anwendung des ersten Übertragungsverfahrens Informationen über die auszutauschen Daten übertragen. Diese Informationen bzw. Metadaten sind insbesondere ausgewählt aus Angaben zur Art der zu übermittelnden Daten, Angaben zum Datenformat, Angaben zur benötigen Güte der Übertragung, die Größe der zu übermittelnden Daten oder einer Kombination mindestens zweier dieser Angaben. Bei den zu übermittelnden Daten kann sich beispielsweise um beliebige, bei einem der Teilnehmer abgelegte Dateien handeln, beispielsweise um Kontaktdaten, insbesondere virtuelle Visitenkarten, Fotos, Anwendungen (Apps) oder Teile von Anwendungen, Textnachrichten, Webseiten, Links zu Webseiten oder Links zu im Internet hinterlegten Dateien.

Die Metadaten können auch insbesondere Angaben darüber umfassen, welcher Teilnehmer bei der Übertragung die Daten sendet und welcher Teilnehmer die Daten empfängt.

Zudem können über die ausgetauschten Metadaten die benötigte Güte und weitere Parameter der Übertragung festgelegt werden. Beispielsweise kann festgelegt werden, ob die Übertragung binär oder als Text erfolgt. Ebenfalls kann festgelegt werden, ob die erfolgreiche Übermittlung der Daten bestätigt werden soll, oder ob eine solche Bestätigung nicht erforderlich ist.

Beispielsweise bei einer Endanwendung bzw. App zum Austauschen virtueller Visitenkarten zwischen zwei Personen können je nach Art der auszutauschenden Daten unterschiedliche Anforderungen an die Güte und die Art der Übermittlung definiert werden. In einem Beispiel zeigt eine Endanwendung auf einem Smartphone das Bild einer virtuellen Visitenkarte von Person A. Person A trifft nun auf Person B, welche ein Smartphone mit dergleichen App besitzt, die den gleichen Service implementiert. Die Smartphones setzten unterschiedliche Plattformen bzw. Betriebssysteme ein, so dass eine direkte Kommunikation unter Verwendung der zweiten Übertragungsverfahren nicht möglich ist. Für eine direkte Kommunikation steht nur das erste Übertragungsverfahren zur Verfügung, über das vorgeschlagene Verfahren sind aber beide Smartphones als Teilnehmer über eine Umsetzungseinheit miteinander verbunden. Person A zieht nun die virtuelle Visitenkarte auf dem Display seines Smartphones mit dem Finger von links nach rechts. Bei Person B soll diese Visitenkarte nun in dem Maße im Bild erscheinen, wie sie bei Person A aus dem sichtbaren Bereich verschwunden ist. Wenn die Visitenkarte von Person A völlig aus dem sichtbaren Bereich "gewischt" wurde und bei Person B vollständig zu sehen ist, erhält Person B die Kontaktdaten von Person A.

Daraus ergibt sich: Übertragen werden sollen die Kontaktdaten und die Position einer virtuellen Visitenkarte. Für die Kontaktdaten ist es wichtig, dass sie verschlüsselt und vollständig sind. Die Übertragungsgeschwindigkeit ist hierbei nachrangig - der Kanal wird also definiert als:
Übertragungsart: Binär - wegen der Verschlüsselung
Übertragungsgüte: Notifying - zum verlässlichen Versenden.

Die Visitenkarte wird unter der Vermittlung der Umsetzungseinheit von dem Smartphone der Person A an das Smartphone der Person B übertragen. Da als Übertragungsgüte Notifying festgelegt wurde, quittiert das Smartphone der Person B den Empfang.

Für die Position der virtuellen Visitenkarten ist hingegen wichtig, dass sie möglichst in Echtzeit übertragen wird, der Kanal wird also definiert als
Übertragungsart: Nur-Text (übertragen wird nur die horizontale Koordinate)
Übertragungsgüte: Broadcasting - zum schnellen Aktualisieren.

Da als Übertragungsgüte Broadcasting festgelegt wurde, wird der Empfang der Daten durch das Smartphone der Person B nicht quittiert. Da die Nachricht als Nur-Text übertragen wird, entfällt der gesamte "Overhead". Es wird nicht übertragen, wie lang die Nachricht ist, ob sie verschlüsselt oder signiert ist. Diese Informationen werden ganz einfach nicht benötigt, da Nur- Text-Kanäle nicht verschlüsselt oder signiert werden können und mit einem Control Character beendet werden (EOM).

Zum Ausführen der Weiterleitung von Daten durch die Umsetzungseinheit werden bevorzugt die Identifikationen der Teilnehmer beim Herstellen der jeweiligen Verbindung des Teilnehmers zur Umsetzungseinheit mitübertragen, sodass der entsprechende Teilnehmer durch die Umsetzungseinheit identifizierbar ist. Dementsprechend wird beim Übermitteln der Daten, wobei die Umsetzungseinheit die Verbindung vermittelt, die Identifikationen zumindest desjenigen Teilnehmers mitübertragen, der die Daten empfangen soll. Die Umsetzungseinheit leitet dann die Daten an den Teilnehmer mit dieser Identifikation weiter.

Bei dem erfindungsgemäßen Verfahren wird somit das erste Übertragungsverfahren, welches eine geringere Übertragungsgeschwindigkeit, aber dafür einen geringeren Energiebedarf aufweist, zum Auffinden von Umsetzungseinheiten verwendet und zum Austausch von Metadaten, mit denen die eigentlichen zu übermittelnden Daten identifiziert und näher bezeichnet werden können. Das Austauschen der eigentlichen Daten bzw. Nutzdaten erfolgt dann unter Zuhilfenahme einer Variante des zweiten Übertragungsverfahrens, wobei die Umsetzungseinheit zwischen den beiden Teilnehmern, die sonst nicht unter Verwendung des zweiten Übertragungsverfahrens direkt kommunizieren könnten, vermittelt.

Bei dem Verfahren kann vorgesehen werden, dass ein Teilnehmer nach dem Empfang der Kennung der Umsetzungseinheit eine Verbindung mit der Umsetzungseinheit unter Verwendung des ersten und/oder des zweiten Übertragungsverfahrens herstellt, wobei der Teilnehmer seine Identifikation an die Umsetzungseinheit überträgt.

Hierdurch wird die Umsetzungseinheit davon in Kenntnis gesetzt, welche Teilnehmer sich in dem Nahbereich um die Umsetzungseinheit herum befinden, also in dem Bereich, in dem eine direkte drahtlose Datenübertragung mittels des ersten oder des zweiten Übertragungsverfahrens möglich ist. Hierdurch kann die Umsetzungseinheit die Teilnehmer zusätzlich auf im Nahbereich verfügbare Dienste aufmerksam machen, indem über die Verbindung entsprechende Hinweise an die Teilnehmer übermittelt werden.

Bevorzugt wird als erstes Übertragungsverfahrens "Bluetooth Low Energy" eingesetzt. Dieses Übertragungsverfahren zeichnet sich durch seinen äußerst geringen Energiebedarf aus, so dass die Teilnehmer und/oder die Umsetzungseinheit in periodischen Abständen ihre Kennung bzw. ihre Identifikation aussenden können und umgekehrt fortlaufend zum Empfang entsprechender Kennungen und/oder Identifikationen eingerichtet sein können. Bluetooth Low Energy ist im Bluetooth 4.0 Standard, verabschiedet am 17. Dezember 2009 spezifiziert. Auch in Nachfolgestandards ist Bluetooth Low Energy spezifiziert und enthalten, insbesondere auch in den Versionen Bluetooth 4.1 und Bluetooth 4.2.

Die Verwendung von Bluetooth Low Energy hat den Vorteil, dass Bluetooth Low Energy als einziges Übertragungsverfahren auf einem Mobilgerät, insbesondere bei einem auf iOS basierendem Mobilgerät, von einer App im Hintergrund, also wenn das Mobilgerät gesperrt und/oder der Bildschirm abgeschaltet ist, genutzt werden kann. Dadurch ist es möglich, dass eine zur Übertragung von Daten verwendete App durch das Empfangen der Kennung der Umsetzungseinheit "geweckt" wird und weitere Aktionen, einleiten kann. Nach dem Aufwecken kann die App zumindest für einen kurzen Zeitraum auch die schnelleren zweiten Übertragungsverfahren nutzen.

Das zweite Übertragungsverfahren kann in einer oder mehreren verschiedenen, zueinander inkompatiblen Varianten implementiert sein. Die Varianten des zweiten Übertragungsverfahrens sind bevorzugt ausgewählt aus Wi-Fi Direct, Multipeer Connectivity Framework, CFNetwork und Bluetooth (nicht Low Energy).

Hierbei bauen beispielsweise sowohl Wi-Fi Direct als auch das Multipeer Connectivity Framework beide auf WLAN auf, unterscheiden sich jedoch in der Implementierung. Daher kann ein Teilnehmer, der beispielsweise Wi-Fi Direct beherrscht nicht direkt mit einem anderen Teilnehmer kommunizieren, der beispielsweise Multipeer Connectivity Framework verwendet.

Wi-Fi Direct ist beispielsweise in den zur 802.11 Protokollfamilie gehörenden Normen 802.11a, 802.11b, 802.11g und 802.11n spezifiziert, wie sie zum Anmeldetag gültig sind, und steht beispielsweise zur Verfügung, wenn der Teilnehmer Android oder Windows Phone als Betriebssystem einsetzt. Das Multipeer Connectivity Framework ist ein im Betriebssystem iOS der Firma Apple bereitgestellter Dienst, der auf Basis von WLAN-Netzwerken oder Bluetooth-Netzwerken Dienste zur Datenübertragung zwischen iOS Geräten zur Verfügung stellt. Beispielweise handelt es sich bei dem ersten Teilnehmer um ein Mobilgerät auf Basis des Betriebssystems Android und bei dem zweiten Teilnehmer um ein Mobilgerät auf Basis von iOS, so dass eine direkte Kommunikation zwischen den beiden Teilnehmern nicht möglich ist.

Bluetooth (nicht Low Energy) definiert verschiedene Profile für den drahtlosen Datenaustausch zwischen zwei Geräten. Hierbei werden durch den ersten und den zweiten Teilnehmer jeweils unterschiedliche Profile implementiert bzw. zur Verwendung zur Verfügung gestellt, so dass eine direkte Verbindung zwischen den beiden Teilnehmern nicht möglich ist.

CFNetwork ist eine von Apple bereitgestellte Programmierschnittstelle für die Datenübertragung, und abstrahiert für den Programmierer unter anderem den Zugriff auf Datenübertragungsverfahren wie WLAN oder Bluetooth. CFNetwork steht auf Mobilgeräten, die nicht auf iOS basieren, nicht zur Verfügung, so dass eine direkte Kommunikation beispielsweise zwischen einem ersten Teilnehmer, der iOS als Betriebssystem einsetzt und einem zweiten Teilnehmer, der auf einer anderen Plattform basiert, nicht möglich ist.

Somit werden die zweiten Übertragungsverfahren bevorzugt unter Verwendung einer auf WLAN oder Bluetooth basierenden drahtlosen Verbindung hergestellt, die einzelnen Varianten Wi-Fi Direct, Multipeer Connectivity Framework, CFNetwork, oder Bluetooth (nicht Low Energy) unterscheiden sich jedoch in der Art, wie Apps auf verschiedenen Endgeräten für diese zugreifen können.

Stehen mehrere Varianten des zweiten Übertragungsverfahrens für eine Verbindung zwischen einem der Teilnehmer und der Umsetzungseinheit zur Verfügung, so ist es bevorzugt, dass für die Übermittlung der Daten die derzeit schnellste Variante ausgewählt wird. Die derzeit schnellste Variante kann beispielsweise bestimmt werden, indem testweise eine Verbindung unter Verwendung dieser Variante aufgebaut wird und die tatsächlich zur Verfügung stehende Datenübertragungsrate gemessen wird. Dabei ist es möglich, dass zunächst alle zur Verfügung stehenden Varianten getestet werden und anschließend die beste Variante ausgewählt wird. Ebenfalls ist es bevorzugt, dass, sofern eine Verbindung beispielsweise aufgrund von Funkstörungen abbricht, eine Verbindung unter Verwendung einer anderen verfügbaren Variante des zweiten Übertragungsverfahrens hergestellt wird und die Übermittlung der Daten an der Stelle fortgesetzt wird, an der diese zuvor unterbrochen wurde.

Ist über Metadaten eine bestimmte Übertragungsart und/oder Übertragungsgüte festgelegt worden, so ist es bevorzugt, diese Festlegung bei der Wahl der Variante des zweiten Übertragungsverfahrens zu berücksichtigen.

Bei dem Verfahren ist bevorzugt zumindest einer der Teilnehmer als Mobilgerät ausgeführt. Ein Mobilgerät ist beispielsweise ein Smartphone oder ein Tablet (Tablet-Computer), es kann sich aber auch um andere tragbare Geräte wie beispielsweise ein Laptop handeln.

Des Weiteren kann vorgesehen sein, dass einer der beiden Teilnehmer als Server ausgeführt ist, auf dem Daten zum Abruf hinterlegt sind. Bei dem Server kann es sich insbesondere um einen stationären Computer handeln, der entsprechend eingerichtet ist, um als Server zu fungieren. Hierbei ist es beispielsweise denkbar, dass im Bereich eines Messestandes sowohl ein Server als auch eine Umsetzungseinheit bereitgestellt werden, wobei die Umsetzungseinheit es Teilnehmern unabhängig von deren unterstützten Variante des zweiten Übertragungsverfahrens erlaubt, Daten von dem Server mit hoher Geschwindigkeit zu übertragen. Ebenfalls wäre es denkbar, dass von den Teilnehmern Daten an den Server übertragen werden, beispielsweise eine virtuelle Visitenkarte.

Bei dem Verfahren ist des Weiteren bevorzugt vorgesehen, dass die Daten verschlüsselt zwischen den Teilnehmern übertragen werden. Dabei kann eine Ende-zu-Ende Verschlüsselung vorgesehen werden, bei der die übertragenen Daten nur durch den als Empfänger bestimmten Teilnehmer lesbar sind oder es kann vorgesehen sein, dass eine Verschlüsselung auf Transportebene vorgenommen wird, bei denen die einzelnen drahtlosen Verbindungen zwischen den Teilnehmern und der Umsetzungseinheit verschlüsselt werden. Bei einer Ende-zu-Ende Verschlüsselung ist ausgeschlossen, dass die Umsetzungseinheit die übermittelten Daten lesen kann, wodurch das Vertrauen der Nutzer gesteigert werden kann. Ferner kann vorgesehen sein, dass mittels kryptographischer Verfahren die an der Übertragung beteiligten Teilnehmer und/oder die Umsetzungseinheit eindeutig identifizierbar sind und deren Identität überprüft werden kann. Für die Prüfung der Identität der Beteiligten und für die Verschlüsselung der Daten kann jedes dem Fachmann bekannte Verfahren wie beispielsweise RSA oder AES eingesetzt werden.

Ein weiterer Aspekt der Erfindung betrifft das Bereitstellen einer Umsetzungseinheit. Die Umsetzungseinheit ist eingerichtet, eines der hierin beschriebenen Verfahren auszuführen. Dementsprechend gelten die im Rahmen der Verfahren offenbarten Merkmale entsprechend für die Umsetzungseinheit und umgekehrt im Rahmen der Umsetzungseinheit offenbarte Merkmale entsprechend für die Verfahren.

Die Umsetzungseinheit umfasst erste und zweite Übertragungsmittel, wobei die ersten Übertragungsmittel zur Ausführung des ersten Übertragungsverfahrens eingerichtet sind und die zweiten Übertragungsmittel zur Ausführung des zweiten Übertragungsverfahrens eingerichtet sind.

Die Umsetzungseinheit umfasst bevorzugt eine erste Übertragungseinheit, die zur Durchführung von Datenübertragungen gemäß Bluetooth Low Energy eingerichtet ist.

Des Weiteren umfasst die Umsetzungseinheit bevorzugt zwei oder mehr zweite Übertragungsmittel, welche jeweils zur Ausführung einer anderen Variante des zweiten Übertragungsverfahrens eingerichtet sind. Bevorzugt sind die zweiten Übertragungsmittel jeweils zur Durchführung von zumindest einem Übertragungsverfahren ausgewählt aus Wi-Fi Direct, Multipeer Connectivity Framework, CFNetwork und Bluetooth (nicht Low Energy) eingerichtet.

Bevorzugt ist zumindest ein Übertragungsmittel als ein Mobilgerät, insbesondere als Smartphone oder Tablet ausgeführt, wobei das Mobilgerät mit der Umsetzungseinheit gekoppelt ist. Hierzu ist das Mobilgerät beispielsweise mit einer direkten Kabelverbindung mit den restlichen Komponenten der Umsetzungseinheit verbunden. Diese können beispielsweise als Computer wie einen PC oder einen Server ausgestaltet sein und gemeinsam mit den mit dem Computer verbundenen Übertragungsmitteln die Umsetzungseinheit ausbilden. Dabei kann insbesondere vorgesehen sein, dass für eine oder mehrere unterstützte Varianten des zweiten Übertragungsverfahrens zumindest ein Mobilgerät als Übertragungsmittel in der Umsetzungseinheit angeordnet ist.

Auch können mehrere Mobilgeräte als zweite Übertragungsmittel vorgesehen sein und jeweils unterschiedliche Varianten implementieren. Beispielsweise kann die Umsetzungseinheit ein Smartphone aufweisen, welches mit dem Betriebssystem Android ausgestattet ist, und ein weiteres Smartphone aufweisen, welches mit dem Betriebssystem iOS ausgestattet ist. Dabei kommuniziert das auf einem Android Smartphone basierende Übertragungsmittel mit Teilnehmern, die ebenfalls Android als Betriebssystem einsetzen und entsprechend die Übertragungsmittel, die auf einem Smartphone mit iOS basieren, mit Teilnehmern, die iOS als Betriebssystem einsetzen. Die Umsetzungseinheit wird dadurch in die Lage versetzt, mit Teilnehmern unterschiedlicher Plattformen bzw. mit unterschiedlichen Betriebssystemen zu kommunizieren und zwischen diesen eigentlich zueinander inkompatiblen Systemen zu vermitteln.

Des Weiteren ist es bevorzugt, dass zumindest eine Übertragungseinheit als mit dem Computer der Umsetzungseinheit verbundene oder in diesen Integrierte Funkschnittstelle, wie beispielsweise einen WLAN-Adapter oder einen Bluetooth-Adapter, ausgeführt ist. Hierbei sind beliebige Mischformen denkbar, so dass die Übertragungseinheiten als beliebige Kombinationen von Mobilgeräten und Funkadaptern bereitgestellt werden können. Ebenfalls sind Varianten realisierbar, bei denen alle Übertragungseinheiten als Mobilgerät oder alle Übertragungseinheiten als Funkadapter ausgeführt sind.

Ein weiterer Aspekt Erfindung ist es, Computerprogramme bereitzustellen, um die hierin beschriebenen Verfahren auszuführen. Hierzu wird erfindungsgemäß ein Computerprogramm vorgeschlagen, welches die von einem Teilnehmer auszuführenden Schritte eines der Verfahren ausführt, wenn das Computerprogramm auf einer programmierbaren Computereinrichtung ausgeführt wird. Bei dem Computerprogramm kann es sich beispielsweise um eine Applikation handeln, welche beispielsweise auf einem Smartphone oder Tablet ausführbar ist. Das Computerprogramm kann auch als Modul oder Bibliothek vorliegen, welche zusammen mit einer Applikation eingesetzt und auf einem mobilen Gerät wie beispielsweise einem Smartphone oder Tablet ausgeführt wird.

Ebenfalls wird ein Computerprogramm vorgeschlagen, gemäß dem die von der Umsetzungseinheit auszuführenden Schritte eines der hierin beschriebenen Verfahren durchgeführt werden, wenn das Computerprogramm auf einer programmierbaren Computereinrichtung ausgeführt wird. Das Computerprogramm kann zum Beispiel auf einem Computersystem der Umsetzungseinheit ausgeführt werden.

Die vorgeschlagenen Programme können auf einem maschinenlesbarem Speichermedium gespeichert werden, auf einem permanenten oder wiederbeschreibbaren Speichermedium oder in Zuordnung zu einer Computereinrichtung oder auf einer entfernbaren CD-ROM, DVD, BLU-Ray Disc oder einem USB Stick. Zusätzlich oder alternativ können die beschriebenen Computerprogramme auf einer Computereinrichtung wie etwa auf einem Server zum Herunterladen bereitgestellt werden, zum Beispiel über ein Datennetzwerk wie das Internet oder eine Kommunikationsverbindung wird eine Telefonleitung oder eine drahtlose Verbindung.

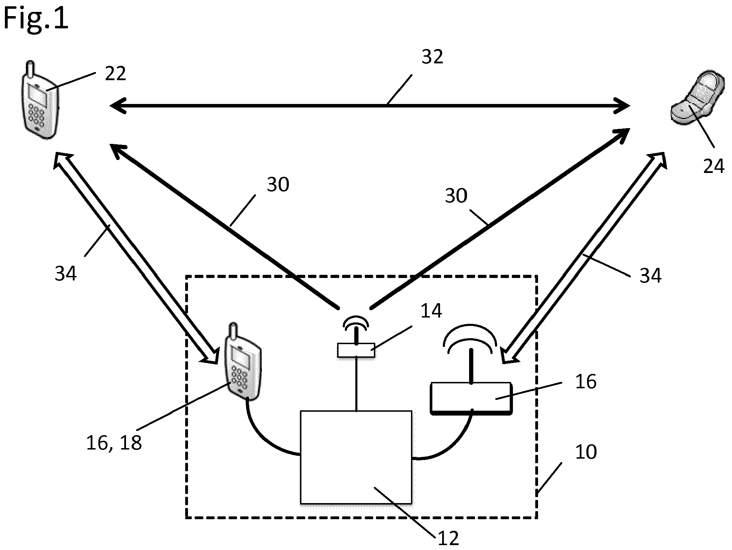

In der Figur 1 ist ein Ausführungsbeispiel des erfindungsgemäßen Verfahrens dargestellt. Die Figur stellt hierbei den Gegenstand der Erfindung nur schematisch dar.

Die Figur 1 zeigt eine Umsetzungseinheit 10 die einen Computer 12, ein erstes Übertragungsmittel 14 und zwei zweite Übertragungsmittel 16 umfasst. Der Computer 12 steht dabei mit dem ersten Übertragungsmittel 14 und den beiden zweiten Übertragungsmitteln 16 in Verbindung. Das erste Übertragungsmittel 14 ist hierbei eingerichtet, ein erstes Übertragungsverfahren auszuführen und die zweiten Übertragungsmittel 16 sind jeweils eingerichtet, eine Variante eines zweiten Übertragungsverfahrens auszuführen. Bei dem ersten Übertragungsverfahren handelt es sich beispielsweise um Bluetooth Low Energy und bei den zweiten Übertragungsverfahren handelt es sich um verschiedene Varianten von auf WLAN aufbauenden Übertragungsverfahren. Dabei ist eine Variante beispielsweise Wi-Fi Direct und die andere Variante beispielsweise Multipeer Connectivity Framework.

In einem Ausführungsbeispiel ist der Computer 12 ein unter Bezeichnung "Mac Mini" erhältlicher Computer (der Firma Apple, USA) und bringt bereits das erste Übertragungsmittel 14 als eine im Mac Mini enthaltene Komponente mit, um mittels Bluetooth Low Energy zu kommunizieren. Ebenfalls bringt der Mac Mini bereits ein zweites Übertragungsmittel 16 mit, welches eingerichtet ist, mittels Multipeer Connectivity Framework zu kommunizieren. Um auch mittels Wi-Fi Direct kommunizieren zu können, wird als weiteres zweites Übertragungsmittel 16 ein Mobilgerät 18 mit dem Computer 12 verbunden. Das Mobilgerät 18 ist beispielsweise als Smartphone ausgeführt, welches als Betriebssystem Android verwendet.

Ferner sind in der Figur 1 zwei Teilnehmer 22 und 24 zu erkennen. Dabei ist jeder der beiden Teilnehmer 22 und 24 eingerichtet, um mittels des ersten Übertragungsverfahrens, hier Bluetooth Low Energy, zu kommunizieren. Ferner ist in dem dargestellten Beispiel der erste Teilnehmer 22 auch zur Kommunikation mit einem zweiten Übertragungsverfahren eingerichtet, und zwar hier mittels Wi-Fi Direct. Der zweite Teilnehmer 24 ist im dargestellten Beispiel ebenfalls eingerichtet, ein zweites Übertragungsverfahren auszuführen, hier Multipeer Connectivity Framework. Der erste Teilnehmer 22, beispielsweise ein androidbasiertes Smartphone, ist somit nicht in der Lage mittels des zweiten Übertragungsverfahrens mit dem zweiten Teilnehmer 24, hier ein iOS basierendes Smartphone, zu kommunizieren.

Bei dem vorgeschlagenen Verfahren ist es vorgesehen, dass die Umsetzungseinheit 10 ihre Kennung aussendet und diese von den beiden Teilnehmern 22, 24 empfangen wird. Dies in der Figur 1 mit den Pfeilen mit Bezugszeichen 30 angedeutet. Die beiden Teilnehmer 22 und 24 bauen zur Übermittlung von Daten zunächst eine direkte drahtlose Verbindung zueinander auf, wobei das erste Übertragungsverfahren, hier Bluetooth Low Energy, verwendet wird. Diese Verbindung ist in der Figur 1 mit dem Bezugszeichen 32 angedeutet. Über die direkte drahtlose Verbindung 32 tauschen die beiden Teilnehmer 22 und 24 ihre Identifikationen aus, über die diese eindeutig identifizierbar sind, und können gegebenenfalls Metadaten zu den zu übermittelnden Daten übertragen. Im nächsten Schritt baut jeder der beiden Teilnehmer 22, 24 unter Verwendung der jeweils unterstützten Variante des zweiten Übertragungsverfahrens eine drahtlose Verbindung zu der Umsetzungseinheit 10 auf. Diese Verbindungen sind in der Figur 1 jeweils mit einem Pfeil mit dem Bezugszeichen 34 angedeutet. Jeder der beiden Teilnehmer 22, 24 übermittelt dabei seine Identifikation an die Umsetzungseinheit 10. Im Anschluss können die beiden Teilnehmer 22, 24 schnell Daten von einem Teilnehmer zum jeweils anderen Teilnehmer übermitteln, wobei die Daten mittels der unter Verwendung der zweiten Übertragungsmittel aufgebauten Verbindungen 34 zunächst zu der Umsetzungseinheit 10 gesendet werden, die diese an den jeweils anderen Teilnehmer 22, 24 weiterleitet. Nach Abschluss der Übermittlung der Daten können die Verbindungen wieder getrennt werden.

Gegenstand der Erfindung ist auch ein System, welches einen Server aufweist, an den sich die Clients anmelden können unter Mitteilung, auf welcher Plattform und in welchem Format die zu übermittelnden Daten von ihnen abgesandt werden und in welchem Format sie die von anderen Clients zu empfangenden Daten erwarten, so dass diese vom jeweiligen Client weiterverarbeitet werden können, eine Umsetzungseinheit, welche die Datenformate von den Clients in die von anderen Clients angeforderten Datenformate umsetzt und auf Abruf bereitstellt, eine Einheit zur Auswahl der zu verwendenden Datenübertragungsstrecken für die umgesetzten Datenformate, wobei die Verfügbarkeit der jeweiligen Datenübertragungsstrecke sowie eine möglichst hohe Datenübertragungsrate prioritäre Auswahlkriterien sind, derart, dass diejenige Datenübertragungsstrecke Verwendung findet, die bei gegebener Verfügbarkeit die höchste Datenübertragungsrate bietet, und eine Verbindungseinheit, welche die umgesetzten Daten auf die jeweilig ausgewählten Datenübertragungsstrecken leitet.

Ein Client ist hierbei ein Teilnehmer an der durch das System ermöglichten Kommunikation. Das System umfassend die Umsetzungseinheit und die Clients bzw. Teilnehmer ist eingerichtet, die beschriebenen Verfahren auszuführen, so dass im Rahmen des Verfahrens beschriebene Merkmale für das System offenbart werden und umgekehrt im Rahmen des Systems beschriebene Merkmale für das Verfahren offenbart werden.

In der Praxis können die Clients vorzugsweise Smartphones sein, die mit unterschiedlichen Betriebssystemen arbeiten wie beispielsweise Android oder iOS, die aufgrund der unterschiedlichen Plattformen normalerweise nicht miteinander kommunizieren können. Denkbar sind aber auch andere mobile Geräte wie beispielsweise Tablets. Hierauf ist das erfindungsgemäße System aber nicht eingeschränkt.

Unter Server wird in diesem Zusammenhang eine Einheit verstanden, welche in der Lage ist, die Daten von einem Client in der Umsetzungseinheit so aufzuarbeiten, dass ein Client auf einer anderen Plattform die umgesetzten Daten weiterverarbeiten kann. Der Server kann beispielsweise im Messebereich, also wo ein ortsfester Counter zu Präsentationszwecken zur Verfügung steht, als stationäre Zentraleinheit wie ein PC ausgebildet sein.

Er kann aber auch als eine funktionelle Einheit von einem der Clients ausgebildet sein, nämlich jenem, der als letztes Daten abgesandt hat. Alle anderen anwesenden und eingeloggten Clients verbinden sich dann und holen die neue Nachricht ab. Sobald sie die Nachricht abgeholt haben, werden sie selbst wieder zu Servern, um die Nachricht weiter zu leiten.

Das erfindungsgemäße System ist vorteilhafterweise so eingerichtet, dass nach Unterbrechung der Datenübertragung auf einer Datenübertragungsstrecke die Datenübertragung auf einer anderen verfügbaren Datenübertragungsstrecke nahtlos wieder aufgenommen wird. Hierdurch werden Datenverluste während der Datenübertragung, aber auch andernfalls notwendig werdende wiederholte Datenübertragungen vermieden.

Bevorzugt ist das System so ausgebildet, dass die Anmeldung der Clients an dem Server nach Empfang von Initialisierungssignalen von Bluetooth-Sendern in der Peripheral-Rolle in den Clients durch eine in den Clients abgelegten Software-Anwendung eingeleitet wird. Sobald also ein Client in das Nahfeld der Bluetooth-Sender gelangt, findet ein "Handshake" (Vermittlung) zwischen dem Client und dem Server statt, wobei die Art und Weise der Kommunikation zwischen beiden Geräten ausgehandelt wird. Die Annäherung eines Clients an einen Bluetooth-Sender hat also ein regelrechtes "Aufwecken" des Clients und der in ihm gespeicherten Software zur Folge.

Unter Nahfeld bzw. Nahbereich wird hierbei der Bereich um den Bluetooth-Sender verstanden, innerhalb dem das Signal des Bluetooth-Senders durch einen Client empfangbar ist.

Die Auswahl der für die Datenübermittlung verwendeten Datenübertragungsstrecken erfolgt bevorzugt nach einem streng hierarchischen System, bei dem die für sich bekannten Datenübertragungsraten der Datenübertragungsstrecken in aufsteigender Reihenfolge zur Datenübertragung herangezogen werden. Es ist also dafür Sorge getragen, dass die jeweils schnellste verfügbare Datenübertragungsstrecke zum Einsatz kommt.

Alternativ kann in dem System vorgesehen sein, dass die Auswahl der Datenübertragungsstrecken anhand eines Echtzeittestes ihrer jeweiligen Datenübertragungsraten erfolgt. Bei diesem Verfahren wird also nicht auf vorab abgespeicherte feste Werte für die Datenübertragungsrate zurückgegriffen, sondern vielmehr auf in Echtzeit tatsächlich gemessene und verfügbare Datenübertragungsraten.

In dem System kommen bevorzugt die folgenden Datenübertragungsstrecken zur Anwendung: TCP/IP, Bluetooth Low Energy, Multipeer Connectivity Framework und/oder Internet. Diese Liste kann jederzeit mit dem Aufkommen von neuen Technologien ergänzt werden.

In einem Service wird definiert, welche Infrastrukturen unterstützt werden sollen. Das System verknüpft dann die entsprechenden Connectoren, wobei hierunter de facto Adapter zu verstehen sind, die vom System genutzt werden, um die schnellste verfügbare Verbindung aufzubauen und die Nachricht in dem ausgehandelten Übertragungsstandard zu senden und zu empfangen.

Möchte nun eine Anwendung nach Gegenstellen mit dem gleichen Service suchen, nutzt das System alle zur Verfügung stehenden (und vom Service implementierten) Connectoren, um diese Gegenstellen zu finden.

Am Anfang einer Verbindung steht der Austausch der Identifier beider Peers (Gegenstellen). Über diese Peerldentifier bzw. Identifikation ist jede Gegenstelle, jedes Endgerät, eindeutig zu identifizieren. So kann über alle Netzwerktopologien hinweg jede Infrastruktur mit einer Gegenstelle in Verbindung gebracht werden. Bricht die Infrastruktur eines Connectors weg (z.B. weil die Anwendung in den Hintergrund gelegt wird und z.B. die TCP/IP-Verbindungen vom Betriebssystem automatisch gekappt werden), springt das System auf die nächstschnellere Infrastruktur um. Wurde grade eine Nachricht gesendet, wird die Nachricht an der gleichen Stelle weitergesendet.

Ein besonderer Fall ist hier Bluetooth Low Energy: da die Übertragungsraten sehr begrenzt sind, besteht z.B. die Möglichkeit des ausschließlichen Austauschs der Peerldentifier, wenn keine andere AdHoc-lnfrastruktur verfügbar ist. Mit diesen Peerldentifiern kann dann ein Webserver aufgerufen werden und eine "getunnelte" Verbindung zwischen beiden Endgeräten herstellen: Peer A verbindet sich mit dem Webserver und meldet, dass er eine Verbindung zu Peer B wünscht. Peer B wiederum meldet an den Webserver, dass er mit Peer A verbunden werden möchte. Der Webserver stellt nun einen Puffer bereit, nimmt Nachrichten von beiden Parteien an und leitet sie an den jeweiligen Partner weiter.

Schließlich kann vorgesehen sein, dass in dem System die zu übermittelnden Daten verschlüsselt sind mit AES oder RSA. Dies dient selbstverständlich der Erhöhung der Datensicherheit.

Nachfolgend wird in Ergänzung zu den in den Ansprüchen beschriebenen Ausführungsformen ein Beispiel für die Anwendung des erfindungsgemäßen Systems gegeben:
Eine Endanwendung zeigt auf einem Smartphone, auf dem eine spezielle App läuft, das Bild einer virtuellen Visitenkarte von Person A. Person A trifft nun auf Person B, welche ein Smartphone mit dergleichen App besitzt, die den gleichen Service implementiert. Beide Smartphones sind über das System miteinander verbunden. Person A zieht nun die virtuelle Visitenkarte auf dem Display seines Smartphones mit dem Finger von links nach rechts. Bei Person B soll diese Visitenkarte nun in dem Maße im Bild erscheinen, wie sie bei Person A aus dem sichtbaren Bereich verschwunden ist. Wenn die Visitenkarte von Person A völlig aus dem sichtbaren Bereich "gewischt" wurde und bei Person B vollständig zu sehen ist, erhält Person B die Kontaktdaten von Person A.

Daraus ergibt sich: Übertragen werden sollen die Kontaktdaten und die Position einer virtuellen Visitenkarte. Für die Kontaktdaten ist es wichtig, dass sie verschlüsselt und vollständig sind. Die Übertragungsgeschwindigkeit ist hierbei nachrangig - der Kanal wird also definiert als:
- Binär - wegen der Verschlüsselung
- Notifying - zum verlässlichen Versenden.

Für die Position der virtuellen Visitenkarten ist hingegen wichtig, dass sie möglichst in Echtzeit übertragen wird, der Kanal wird also definiert als
- Nur-Text (übertragen wird nur die horizontale Koordinate)
- Broadcasting - zum schnellen Aktualisieren.

Da die Nachricht als Nur-Text übertragen wird, entfällt der gesamte Overhead. Es wird nicht übertragen, wie lang die Nachricht ist, ob sie verschlüsselt oder signiert ist. Diese Informationen werden ganz einfach nicht benötigt, da Nur- Text-Kanäle nicht verschlüsselt oder signiert werden können und mit einem Control Character beendet werden (EOM).

### Ein weiteres Anwendungsbeispiel:

Firma Mustermann möchte mithilfe des erfindungsgemäßen Systems auf die Kontaktdaten eines Nutzers zugreifen. Die App wird die entsprechende Kommunikation erhalten und dem Nutzer anzeigen "Firma Mustermann möchte auf Ihre Kontaktdaten zugreifen". Es muss sichergestellt werden können, dass sich niemand anderes als "Firma Mustermann" ausgeben kann, um die Nutzerdaten abzuschöpfen. Hierzu werden im System die öffentlichen Zertifikate autorisierter Gegenstellen (wie Firmen) verknüpft. Die Firma Mustermann erhält das entsprechende private Zertifikat und sendet nun die Kommunikations-Pakete signiert mit dem privaten Zertifikat. Der technische Empfänger kann nun die Echtheit des Absenders mit Hilfe des öffentlichen Zertifikats überprüfen und nur im Falle einer positiven Prüfung z.B. die Frage nach dem Zugriff auf die Kontaktdaten anzeigen.

Ein beispielhafter Ablauf zwischen Hotelgast und Hotelier kann wie folgt aussehen:
Der Hotelgast installiert sich die zum System passende App.
- Die App lädt beim ersten Start und in regelmäßigen Abständen hinterlegte öffentliche Zertifikate von einem Server
- Der Hotelgast betritt Hotel
- Ein Endgerät mit installierter App des Hoteliers scannt regelmäßig die Umgebung und entdeckt nun das Endgerät des Hotelgasts
- Hotelier-App generiert ein zufälliges AES-Passwort, verschlüsselt dieses mit einem statisch in der App hinterlegten Standardpasswort, signiert dieses mit dem privaten Zertifikat und sendet das verschlüsselte und signierte Passwort an Gast-App
- Gast-App validiert die Signierung des Pakets anhand des öffentlichen Zertifikats, entschlüsselt das spezifische Punkt-zu-Punkt-Passwort mit dem generischen Passwort und verwendet von nun an dieses Passwort zur Ver- und Entschlüsselung aller Kommunikationspakete
- Nach erfolgreicher Validierung wird die Meldung "Hotelier möchte auf Ihre Kontaktdaten zugreifen" auf dem Display angezeigt.

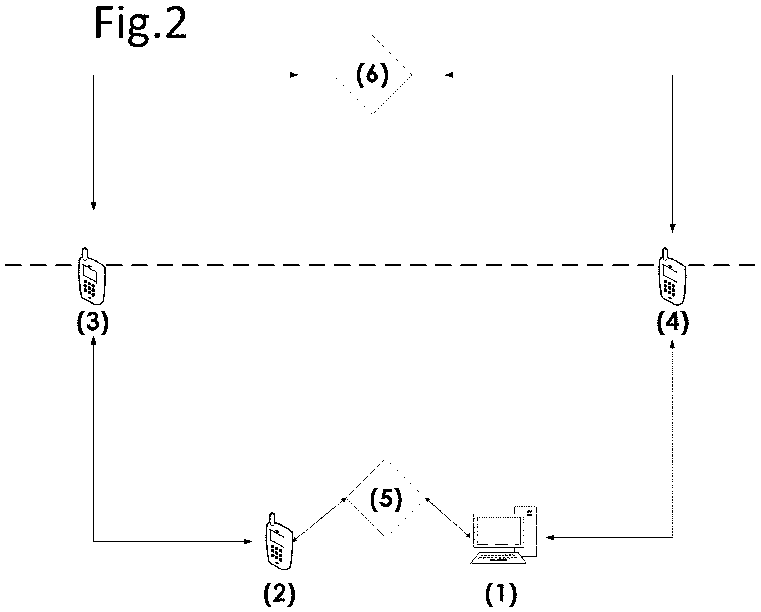

Das System wird kurz anhand der Figur 2 näher erläutert.

Figur 2 zeigt den vereinfachten Aufbau des Systems. Dargestellt ist ein beispielhafter Aufbau des erfindungsgemäßen Systems. Keinesfalls ist es auf diese vereinfachte Darstellung beschränkt.

Erkennbar sind die Bestandteile Server 1, Clients 2, 3 und 4, hier dargestellt als Smartphones, die Umsetzungseinheit 5 sowie der Bluetooth-Sender 6. Gelangt ein Client 2,3 oder 4 in das Nahfeld der Bluetooth-Sender 6, so empfängt er dessen Initialisierungssignale, so dass die Anmeldung des Clients am Server 1 durch die auf dem Client abgelegte Software-Anwendung (app) eingeleitet wird. In Folge findet nun ein Handshake zwischen dem Client 2, 3 oder 4 und dem Server 1 statt, wobei die Art und Weise der Kommunikation zwischen beiden Geräten ausgehandelt wird. Das Ergebnis dieses Handshakes hängt natürlich ab davon, auf welcher Plattform der jeweilige Client betrieben wird. Dies wird bei einem Smartphone typischerweise die Plattform Android oder iOS sein. Hierauf ist der Betrieb des erfindungsgemäßen Systems jedoch nicht beschränkt Mit anderen Worten bewirkt das Herannahen eines Clients 2, 3 oder 4 an das Nahfeld der Bluetooth-Sender 6 gewissermaßen ein "Aufwecken" des Clients und der in ihm gespeicherten Software.

Ist die Kommunikation zwischen dem Client und dem Server ausgehandelt, kann eine Kommunikation über eine Umsetzungseinheit 5 aufgenommen werden, in der die Datenformate der Clients 2, 3 oder 4 in die von anderen am System angemeldeten Clients angeforderten Datenformate umgesetzt und auf Abruf bereit gestellt werden. Hierzu bedarf es - wie erwähnt - selbstverständlich der Anmeldung eines weiteren Clients, welcher mit dem ersten Client kommunizieren möchte. Der Server 1 ermittelt also, wie und welche Datenformate von einem ersten Client umgesetzt werden müssen, damit ein weiterer Client die Daten weiterverarbeiten kann.

Für die Übertragung der Daten von einem Client zum nächsten ist eine Verbindungseinheit (nicht dargestellt) vorgesehen, welche die umgesetzten Daten auf die Datenübertragungsstrecken leitet. Die Auswahl der für die Datenübermittlung verwendeten Datenübertragungsstrecke erfolgt bevorzugt nach einem streng hierarchischen System. Die an und für sich bekannten Datenübertragungsraten der einzelnen Datenübertragungsstrecken (WiFi, GSM, UMTS, LTE etc.) werden dabei in aufsteigender Reihenfolge zur Datenübertragung herangezogen, so dass dafür Sorge getragen ist, dass die jeweils schnellste verfügbare Datenübertragungsstrecke zum Einsatz kommt.

Das System weist insbesondere folgende Merkmale auf:
1. System zur Umsetzung und Vermittlung von Daten von Clients (2,3,4) auf gleichen oder unterschiedlichen Plattformen, so dass die Daten von einem Client auf den anderen Clients weiterverarbeitet werden können, sowie zur Auswahl der Datenübertragungsstrecken hierfür in einem Nahfeld, aufweisend
   einen Server (1), an den sich die Clients (2,3,4) anmelden können unter Mitteilung, auf welcher Plattform und in welchem Format die zu übermittelnden Daten von ihnen abgesandt werden und in welchem Format sie die von anderen Clients zu empfangenden Daten erwarten, so dass diese vom jeweiligen Client weiterverarbeitet werden können,
   eine Umsetzungseinheit (5), welche die Datenformate von den Clients (2,3,4) in die von anderen Clients angeforderten Datenformate umsetzt und auf Abruf bereitstellt,
   eine Einheit zur Auswahl der zu verwendenden Datenübertragungsstrecken für die umgesetzten Datenformate, wobei die Verfügbarkeit der jeweiligen Datenübertragungsstrecke sowie eine möglichst hohe Datenübertragungsrate prioritäre Auswahlkriterien sind, derart, dass diejenige Datenübertragungsstrecke Verwendung findet, die bei gegebener Verfügbarkeit die höchste Datenübertragungsrate bietet, und
   eine Verbindungseinheit, welche die umgesetzten Daten auf die jeweilig ausgewählten Datenübertragungsstrecken leitet
2. System nach Merkmal 1, bei dem der Server (1) als stationäre Zentraleinheit ausgebildet ist.
3. System nach Merkmal 1, bei dem der Server (1) als funktionelle Einheit von einem Client gebildet ist, der als letztes Daten abgesandt hat.
4. System nach einem der Merkmale 1 bis 3, das so eingerichtet ist, dass nach Unterbrechung der Datenübertragung auf einer Datenübertragungsstrecke die Datenübertragung auf einer anderen verfügbaren Datenübertragungsstrecke nahtlos ohne Datenverlust wieder aufgenommen wird.
5. System nach einem der Merkmale 1 bis 4, bei dem die Anmeldung der Clients (2,3,4) an dem Server (1) nach Empfang von Initialisierungssignalen von Bluetooth-Sendern (6) in der Peripheral-Rolle in den Clients (2,3,4) durch eine in den Clients abgelegten Software- Anwendung eingeleitet wird.
6. System nach einem der Merkmale 1 bis 5, bei dem die Auswahl der Datenübertragungsstrecken anhand eines streng hierarchischen Systems erfolgt, bei dem deren bekannten Datenübertragungsraten in aufsteigender Reihenfolge zur Datenübertragung herangezogen werden.
7. System nach einem der Merkmale 1 bis 6, bei dem die Auswahl der Datenübertragungsstrecken anhand eines Echtzeittestes ihrer jeweiligen Datenübertragungsraten erfolgt.
8. System nach einem der Merkmale 1 bis 7, bei dem die folgenden Datenübertragungsstrecken zur Anwendung kommen: TCP/IP, Bluetooth Low Energy, Multipeer Connectivity Framework und/oder Internet.
9. System nach einem der Merkmale 1 bis 8, bei dem die zu übermittelnden Daten verschlüsselt sind mit AES oder RSA.

Im Zusammenhang mit dem beschriebenen System kann das erfindungsgemäße Verfahren auch mit den folgenden Merkmalen beschrieben werden:
10. Verfahren zur Umsetzung und Vermittlung von Daten von Clients (2,3,4) auf gleichen oder unterschiedlichen Plattformen, so dass die Daten von einem Client auf den anderen Clients weiterverarbeitet werden können, sowie zur Auswahl der Datenübertragungsstrecken hierfür in einem Nahfeld, umfassend
   Anmeldung der Clients (2,3,4) an einem Server (1) unter Mitteilung, auf welcher Plattform und in welchem Format die zu übermittelnden Daten von ihnen abgesandt werden und in welchem Format sie die von anderen Clients zu empfangenden Daten erwarten, so dass diese vom jeweiligen Client weiterverarbeitet werden können,
   Umsetzung der Datenformate von den Clients (2,3,4) in die von anderen Clients angeforderten Datenformate und Bereitstellung dieser auf Abruf,
   Auswahl der zu verwendenden Datenübertragungsstrecken für die umgesetzten Datenformate im Nahfeld, wobei die Verfügbarkeit der jeweiligen Datenübertragungsstrecke sowie eine möglichst hohe Datenübertragungsrate prioritäre Auswahlkriterien sind, derart, dass diejenige Datenübertragungsstrecke Verwendung findet, die bei gegebener Verfügbarkeit die höchste Datenübertragungsrate bietet,
   und Einleitung der umgesetzten Daten auf die jeweilig ausgewählten Datenübertragungsstrecken.
11. Verfahren nach Merkmal 10, bei dem der Server (1) als stationäre Zentraleinheit ausgebildet wird.
12. Verfahren nach Merkmal 10, bei dem der Server (1) als funktionelle Einheit von einem Client gebildet wird, der als letztes Daten abgesandt hat
13. Verfahren nach einem der Merkmale 10 bis 12, weiterhin umfassend die nahtlose Wiederaufnahme der Datenübertragung nach Unterbrechung der Datenübertragung auf einer Datenübertragungsstrecke auf einer anderen verfügbaren Datenübertragungsstrecke ohne Datenverlust.
14. Verfahren nach einem der Merkmale 10 bis 13, bei dem die Anmeldung der Clients an dem Server (1) nach Empfang von Initialisierungssignalen von Bluetooth-Sendern (6) in der Peripheral-Rolle in den Clients (2,3,4) durch eine in den Clients abgelegten Software-Anwendung eingeleitet wird.
15. Verfahren nach einem der Merkmale 10 bis 14, bei dem die Auswahl der Datenübertragungsstrecken anhand eines streng hierarchischen Systems erfolgt, bei dem deren bekannten Datenübertragungsraten in aufsteigender Reihenfolge zur Datenübertragung herangezogen werden.
16. Verfahren nach einem der Merkmale 10 bis 15, bei dem die Auswahl der Datenübertragungsstrecken anhand eines Echtzeittestes ihrer jeweiligen Datenübertragungsraten erfolgt.
17. Verfahren nach einem der Merkmale 10 bis 16, bei dem die folgenden Datenübertragungsstrecken zur Anwendung kommen: TCP/IP, Bluetooth Low Energy, Multipeer Connectivity Framework und/oder Internet.
18. Verfahren nach einem der Merkmale 10 bis 17, bei dem die zu übermittelnden Daten mit AES oder RSA verschlüsselt werden.

## Patentansprüche

1. Verfahren zur Übermittlung von Daten zwischen einem ersten Teilnehmer (22) und einem zweiten Teilnehmer (24) unter Verwendung zumindest einer Umsetzungseinheit (10),
wobei der erste Teilnehmer (22), der zweite Teilnehmer (24) und die Umsetzungseinheit (10) jeweils zur drahtlosen Datenübertragung im Nahbereich mit einem ersten Übertragungsverfahren und einem zweiten Übertragungsverfahren eingerichtet sind,
wobei die maximale Datenübertragungsrate des zweiten Übertragungsverfahrens größer ist als die des ersten Übertragungsverfahrens,
wobei das zweite Übertragungsverfahren mehrere Varianten aufweist und wobei der erste Teilnehmer (22) und der zweite Teilnehmer (24) jeweils nur zur Ausführung solcher Varianten eingerichtet sind, welche zueinander inkompatibel sind, umfassend die Schritte:
a) periodisches Aussenden einer Kennung durch die Umsetzungseinheit (10) und periodisches Aussenden einer Identifikation durch den ersten Teilnehmer (22) und den zweiten Teilnehmer (24) unter Verwendung des ersten Übertragungsverfahrens,
b) Empfangen der Kennung der Umsetzungseinheit (10) durch den ersten Teilnehmer (22) und den zweiten Teilnehmer (24) unter Verwendung des ersten Übertragungsverfahrens, wobei die Teilnehmer (22, 24) und die Umsetzungseinheit ebenfalls die ausgesandten Identifikationen der Teilnehmer (22, 24) empfangen,
c) Herstellen einer direkten drahtlosen Verbindung zwischen dem ersten Teilnehmer (22) und dem zweiten Teilnehmer (24) unter Verwendung des ersten Übertragungsverfahrens, wobei Identifikationen der Teilnehmers und optional die Kennung der Umsetzungseinheit (10) ausgetauscht werden,
**dadurch gekennzeichnet, dass** die Umsetzungseinheit (10) zur Ausführung zumindest einer Variante eines jeden Teilnehmers (22, 24) eingerichtet ist, und dass das Verfahren weiterhin umfasst:
d) Herstellen einer durch die Umsetzungseinheit (10) vermittelten Verbindung zwischen dem ersten Teilnehmer (22) und dem zweiten Teilnehmer (24), wobei die Teilnehmer (22, 24) jeweils eine Verbindung zu der Umsetzungseinheit (10) unter Verwendung des zweiten Übertragungsverfahrens aufbauen und die Umsetzungseinheit (10) Daten vom ersten Teilnehmer (22) an den zweiten Teilnehmer (24) weiterleitet und umgekehrt Daten vom zweiten Teilnehmer (24) an den ersten Teilnehmer (12) weiterleitet.

2. Verfahren nach Anspruch 1, **dadurch gekennzeichnet, dass** über die gemäß Schritt c) hergestellte direkte drahtlose Verbindung zwischen den beiden Teilnehmern (22, 24) Metadaten ausgetauscht werden, wobei die Metadaten ausgewählt sind aus Angaben zur Art der zu übermittelnden Daten, Angaben zum Datenformat, Angaben zur benötigen Güte der Übertragung und der Größe der zu übermittelnden Daten oder einer Kombination aus mindestens zweier dieser Angaben.

3. Verfahren nach Anspruch 1 oder 2, **dadurch gekennzeichnet, dass** ein Teilnehmer (22, 24) nach dem Empfangen der Kennung der Umsetzungseinheit (10) eine Verbindung mit der Umsetzungseinheit (10) unter Verwendung des ersten oder des zweiten Übertragungsverfahrens herstellt, wobei der Teilnehmer (22, 24) seine Identifikation an die Umsetzungseinheit (10) überträgt.

4. Verfahren nach einem der Ansprüche 1 bis 3, **dadurch gekennzeichnet, dass** für die Weiterleitung der Daten durch die Umsetzungseinheit (10) gemäß Schritt d) die Teilnehmer (22, 24) ihre jeweilige Identifikation an die Umsetzungseinheit (10) übermitteln, wobei die Umsetzungseinheit (10) die Teilnehmer (22, 24) über ihre Identifikation bei der Weiterleitung der Daten identifiziert.

5. Verfahren nach einem der Ansprüche 1 bis 4, **dadurch gekennzeichnet, dass** das erste Übertragungsverfahren Bluetooth Low Energy ist.

6. Verfahren nach einem der Ansprüche 1 bis 5, **dadurch gekennzeichnet, dass** die Varianten des zweiten Übertragungsverfahren ausgewählt sind aus Wi-Fi Direkt, Multipeer Connectivity Framework, CFNetwork, oder Bluetooth (nicht Low Energy).

7. Verfahren nach einem der Ansprüche 1 bis 6, **dadurch gekennzeichnet, dass**, sofern mehrere Varianten des zweiten Übertragungsverfahrens für eine Verbindung zwischen der Umsetzungseinheit (10) und einem Teilnehmer (22, 24) verfügbar sind, die derzeit schnellste verfügbare Variante ausgewählt wird.

8. Verfahren nach einem der Ansprüche 1 bis 7, **dadurch gekennzeichnet, dass** zumindest ein Teilnehmer (22, 24) als Mobilgerät ausgeführt ist, insbesondere als ein Smartphone oder als ein Tablet.

9. Verfahren nach einem der Ansprüche 1 bis 8, **dadurch gekennzeichnet, dass** einer der beiden Teilnehmer (22, 24) als Server ausgeführt ist, auf dem Daten zum Abruf hinterlegt sind.

10. Umsetzungseinheit (10) **dadurch gekennzeichnet, dass** die Umsetzungseinheit (10) erste Übertragungsmittel (14) und zweite Übertragungsmittel (16) umfasst und zur Verwendung in dem Verfahren nach einem der Ansprüche 1 bis 9 eingerichtet ist.

11. Umsetzungseinheit (10) nach Anspruch 10, **dadurch gekennzeichnet, dass** die Umsetzungseinheit (10) zwei oder mehr zweite Übertragungseinheiten (16) umfasst, welche jeweils zur Verwendung einer anderen Variante des zweiten Übertragungsverfahrens eingerichtet sind.

12. Umsetzungseinheit (10) nach Anspruch 10 oder 11, **dadurch gekennzeichnet, dass** die Umsetzungseinheit (10) eine erste Übertragungseinheit (14) umfasst, die zur Durchführung des Übertragungsverfahren Bluetooth Low Energy eingerichtet ist.

13. Umsetzungseinheit (10) nach einem der Ansprüche 10 bis 12, **dadurch gekennzeichnet, dass** die zweiten Übertragungseinheiten (16) jeweils zur Durchführung von Varianten des zweiten Übertragungsverfahrens ausgewählt aus Wi-Fi Direct, Multipeer Connectivity Framework, CFNetwork, oder Bluetooth (nicht Low Energy) eingerichtet sind.

14. Umsetzungseinheit (10) nach einem der Ansprüche 10 bis 13, **dadurch gekennzeichnet, dass** zumindest eine Übertragungseinheit (14, 16) als ein Mobilgerät (18), insbesondere als Smartphone oder Tablet ausgeführt ist, wobei das Mobilgerät (18) mit der Umsetzungseinheit (10) gekoppelt ist.

15. Computerprogramm, das die von einem Teilnehmer (22, 24) auszuführenden Schritte des Verfahrens nach einem der Ansprüche 1 bis 9 ausführt, wenn es auf einem Computer abläuft.

16. Computerprogramm, das die von der Umsetzungseinheit (10) auszuführenden Schritte des Verfahrens nach einem der Ansprüche 1 bis 9 ausführt, wenn es auf einem Computer abläuft.

## Claims

1. A method for transmitting data between a first subscriber (22) and a second subscriber (24) using at least one conversion unit (10),
wherein the first subscriber (22), the second subscriber (24) and the conversion unit (10) are in each case configured for wireless data transmission in the near field with a first transmission method and a second transmission method,
wherein the maximum data transmission rate of the second transmission method is higher than that of the first transmission method,
wherein the second transmission method has a plurality of variants and wherein the first subscriber (22) and the second subscriber (24) are configured in each case to carry out only those variants which are incompatible with one another,
comprising the steps of:
a) periodic transmission of an identifier by the conversion unit (10) and periodic transmission of an identification by the first subscriber (22) and the second subscriber (24) using the first transmission method,
b) reception of the identifier of the conversion unit (10) by the first subscriber (22) and the second subscriber (24) using the first transmission method, wherein the subscribers (22, 24) and the conversion unit similarly receive the transmitted identifications of the subscribers (22, 24),
c) setting up a direct wireless connection between the first subscriber (22) and the second subscriber (24) using the first transmission method, wherein the identifications of the subscribers and optionally the identifier of the conversion unit (10) are exchanged,
**characterized in that** the conversion unit (10) is configured to carry out at least one variant of each subscriber (22, 24), and **in that** the method furthermore comprises:
d) setting up a connection switched by the conversion unit (10) between the first subscriber (22) and the second subscriber (24), wherein the subscribers (22, 24) in each case set up a connection to the conversion unit (10) using the second transmission method and the conversion unit (10) forwards data from the first subscriber (22) to the second subscriber (24) and, conversely, forwards data from the second subscriber (24) to the first subscriber (12).

2. The method as claimed in claim 1, **characterized in that** metadata are exchanged via the direct wireless connection between the two subscribers (22, 24) which was set-up according to step c), wherein the metadata are selected from information relating to the type of data to be transmitted, information relating to the data format, information relating to the required quality of the transmission, the quantity of data to be transmitted or a combination of at least two of these information elements.

3. The method as claimed in claim 1 or 2, **characterized in that** a subscriber (22, 24), after receiving the identifier of the conversion unit (10), sets up a connection to the conversion unit (10) using the first and/or the second transmission method, wherein the subscriber (22, 24) transmits its identification to the conversion unit.

4. The method as claimed in one of claims 1 to 3, **characterized in that**, for the forwarding of the data by the conversion unit (10) according to step d), the subscribers (22, 24) transmit their respective identification to the conversion unit (10), wherein the conversion unit (10) identifies the subscribers (22, 24) via their identification in the forwarding of the data.

5. The method as claimed in one of claims 1 to 4, **characterized in that** the first transmission method is Bluetooth Low Energy.

6. The method as claimed in one of claims 1 to 5, **characterized in that** the variants of the second transmission method are selected from Wi-Fi Direct, Multipeer Connectivity Framework, CFNetwork or Bluetooth (not Low Energy).

7. The method as claimed in one of claims 1 to 6, **characterized in that**, if a plurality of variants of the second transmission method are available for a connection between the conversion unit (10) and a subscriber (22, 24), the currently fastest available variant is selected.

8. The method as claimed in one of claims 1 to 7, **characterized in that** at least one subscriber (22, 24) is implemented as a mobile device, in particular as a Smartphone or as a tablet.

9. The method as claimed in one of claims 1 to 8, **characterized in that** one of the two subscribers (22, 24) is implemented as a server on which data are stored for retrieval.

10. A conversion unit (10) **characterized in that** the conversion unit (10) comprises first transmission means (14) and second transmission means (16) and is configured for use in the method as claimed in one of claims 1 to 9.

11. The conversion unit (10) as claimed in claim 10, **characterized in that** the conversion unit (10) comprises two or more transmission units (16) which are configured in each case to use a different variant of the second transmission method.

12. The conversion unit (10) as claimed in claim 10 or 11, **characterized in that** the conversion unit (10) comprises a first transmission unit (14) which is configured to carry out the Bluetooth Low Energy transmission method.

13. The conversion unit (10) as claimed in one of claims 10 to 12, **characterized in that** the second transmission units (16) are configured in each case to carry out variants of the second transmission method selected from Wi-Fi Direct, Multipeer Connectivity Framework, CFNetwork or Bluetooth (not Low Energy).

14. The conversion unit (10) as claimed in one of claims 10 to 13, **characterized in that** at least one transmission unit (14, 16) is implemented as a mobile device (18), in particular as a Smartphone or tablet, wherein the mobile device (18) is connected to the conversion unit (10).

15. A computer program which carries out the steps of the method as claimed in one of claims 1 to 9 which are to be carried out by a subscriber (22, 24) when said computer program runs on a computer.

16. The computer program which carries out the steps of the method as claimed in one of claims 1 to 9 which are to be carried out by the conversion unit (10), when said computer program runs on a computer.

## Revendications

1. Procédé de transmission de données entre un premier abonné (22) et un deuxième abonné (24) en utilisant au moins une unité de conversion (10),
le premier abonné (22), le deuxième abonné (24) et l'unité de conversion (10) étant respectivement conçus pour une transmission de données sans fil dans la zone de proximité avec un premier procédé de transmission et un deuxième procédé de transmission,
le débit de transmission de données maximal du deuxième procédé de transmission étant supérieur à celui du premier procédé de transmission,
le deuxième procédé de transmission possédant plusieurs variantes et le premier abonné (22) et le deuxième abonné (24) étant respectivement conçus pour exécuter uniquement les variantes qui sont incompatibles entre elles, comprenant les étapes suivantes :
a) émission périodique d'un identificateur par l'unité de conversion (10) et émission périodique d'une identification par le premier abonné (22) et le deuxième abonné (24) en utilisant le premier procédé de transmission,
b) réception de l'identificateur de l'unité de conversion (10) par le premier abonné (22) et le deuxième abonné (24) en utilisant le premier procédé de transmission, les abonnés (22, 24) et l'unité de conversion recevant également les identifications émises des abonnés (22, 24),
c) établissement d'une liaison sans fil directe entre le premier abonné (22) et le deuxième abonné (24) en utilisant le premier procédé de transmission, les identifications des abonnés et, en option, l'identificateur de l'unité de conversion (10) étant échangés,
**caractérisé en ce que** l'unité de conversion (10) est conçue pour exécuter au moins une variante de l'un de chacun des abonnés (22, 24), et **en ce que** le procédé comprend en outre :
d) établissement d'une liaison commutée par l'unité de conversion (10) entre le premier abonné (22) et le deuxième abonné (24), les abonnés (22, 24) établissant respectivement une liaison avec l'unité de conversion (10) en utilisant le deuxième procédé de transmission et l'unité de conversion (10) transférant des données du premier abonné (22) au deuxième abonné (24) et, inversement, transférant des données du deuxième abonné (24) au premier abonné (12).

2. Procédé selon la revendication 1, **caractérisé en ce que** des métadonnées sont échangées par le biais de la liaison sans fil directe entre les deux abonnés (22, 24) établie selon l'étape c), les métadonnées étant choisies à partir d'indications à propos de la nature des données à communiquer, d'indications à propos du format des données, d'indications à propos de la qualité nécessaire de la transmission et de la taille des données à communiquer ou une combinaison d'au moins deux de ces indications.

3. Procédé selon la revendication 1 ou 2, **caractérisé en ce qu'**après la réception de l'identificateur de l'unité de conversion (10), un abonné (22, 24) établit une liaison avec l'unité de conversion (10) en utilisant le premier ou le deuxième procédé de transmission, l'abonné (22, 24) transmettant son identification à l'unité de conversion (10).

4. Procédé selon l'une des revendications 1 à 3, **caractérisé en ce que** pour le transfert des données par l'unité de conversion (10) selon l'étape d), les abonnés (22, 24) communiquent leur identification respective à l'unité de conversion (10), l'unité de conversion (10) identifiant les abonnés (22, 24) par leur identification lors du transfert des données.

5. Procédé selon l'une des revendications 1 à 4, **caractérisé en ce que** le premier procédé de transmission est le Bluetooth à basse consommation.

6. Procédé selon l'une des revendications 1 à 5, **caractérisé en ce que** les variantes du deuxième procédé de transmission sont choisies parmi le WiFi direct, le Multipeer Connectivity Framework, le CFNetwork ou le Bluetooth (pas à basse consommation).

7. Procédé selon l'une des revendications 1 à 6, **caractérisé en ce que** dans la mesure où plusieurs variantes du deuxième procédé de transmission sont disponibles pour une liaison entre l'unité de conversion (10) et un abonné (22, 24), c'est la variante la plus rapide momentanément disponible qui est choisie.

8. Procédé selon l'une des revendications 1 à 7, **caractérisé en ce qu'**au moins un abonné (22, 24) est réalisé sous la forme d'un appareil mobile, notamment sous la forme d'un Smartphone ou d'une tablette.

9. Procédé selon l'une des revendications 1 à 8, **caractérisé en ce que** l'un des deux abonnés (22, 24) est réalisé sous la forme de serveurs sur lesquels sont stockées des données destinées à être interrogées.

10. Unité de conversion (10), **caractérisée en ce que** l'unité de conversion (10) comporte un premier moyen de transmission (14) et un deuxième moyen de transmission (16) et elle est conçue pour être utilisée dans un procédé selon l'une des revendications 1 à 9.

11. Unité de conversion (10) selon la revendication 10, **caractérisée en ce que** l'unité de conversion (10) comporte au moins deux unités de transmission (16), lesquelles sont respectivement conçues pour utiliser une autre variante du deuxième procédé de transmission.

12. Unité de conversion (10) selon la revendication 10 ou 11, **caractérisée en ce que** l'unité de conversion (10) comporte une première unité de transmission (14) qui est conçue pour mettre en oeuvre le procédé de transmission Bluetooth à basse consommation.

13. Unité de conversion (10) selon l'une des revendications 10 à 12, **caractérisée en ce que** les deuxièmes unités de transmission (16) sont respectivement conçues pour exécuter des variantes du deuxième procédé de transmission choisies parmi le WiFi direct, le Multipeer Connectivity Framework, le CFNetwork ou le Bluetooth (pas à basse consommation).

14. Unité de conversion (10) selon l'une des revendications 10 à 13, **caractérisée en ce qu'**au moins une unité de transmission (14, 16) est réalisée sous la forme d'un appareil mobile (18), notamment sous la forme d'un Smartphone ou d'une tablette, l'appareil mobile (18) étant connecté à l'unité de conversion (10).

15. Programme informatique qui exécute les étapes à exécuter par un abonné (22, 24) du procédé selon l'une des revendications 1 à 9 lorsqu'il est exécuté sur un ordinateur.

16. Programme informatique qui exécute les étapes à exécuter par l'unité de conversion (10) du procédé selon l'une des revendications 1 à 9 lorsqu'il est exécuté sur un ordinateur.
